Europäisches Patentamt

(19) European Patent Office

Office européen des brevets

(11) Veröffentlichungsnummer: **0 193 726**
A2

(12) **EUROPÄISCHE PATENTANMELDUNG**

(21) Anmeldenummer: **86101077.5**

(22) Anmeldetag: **28.01.86**

(51) Int. Cl.⁴: **C 09 J 5/04**, B 42 D 15/08, B 05 D 1/06

(30) Priorität: **07.03.85 DE 3508114**

(43) Veröffentlichungstag der Anmeldung: **10.09.86**
**Patentblatt 86/37**

(84) Benannte Vertragsstaaten: **AT BE CH DE FR GB IT LI LU NL SE**

(71) Anmelder: **O.T. Drescher GmbH, Drescherstrasse, D-7255 Rutesheim (DE)**

(72) Erfinder: **Uhlemayr, Reinhold, Benzstrasse 4, D-7255 Rutesheim (DE)**
Erfinder: **Hoffmann, Dietrich, Chem.Ing., Im Hag 6, D-6701 Rödersheim/Gronau (DE)**

(74) Vertreter: **Jackisch, Walter, Dipl.-Ing., Menzelstrasse 40, D-7000 Stuttgart 1 (DE)**

(54) Verfahren zum Verkleben von Erzeugnissen aus Papier, Folien usw., insbesondere von Beschriftungsblättern.

(57) Die Erfindung betrifft ein Verfahren zum Verkleben von Erzeugnissen aus Papier, Folien usw., insbesondere zum Verkleben von Beschriftungsblättern (12'), wie Einblattbriefen (12), sogenannten Mailern. Bei derartigen Erzeugnissen mußte bisher zwecks Verklebung zu einem geschlossenen Umschlag an bestimmten vorgegebenen Stellen, vorzugsweise an Randzonen (1, 2, 3; 4, 5, 6; 4'), ein Klebstoff aufgebracht und getrocknet werden. Beim Durchgang durch einen elektrostatischen Kopierer oder Laserdrucker bestand der Nachteil, daß infolge der dabei auftretenden Hitzeeinwirkung die aus thermoplastischem Kunststoff bestehende Klebermasse aktiviert wurde und innerhalb der Kopieroder Druckmaschine zu Beschädigungen oder Störungen führte.

Dieser Nachteil wird mit dem erfindungsgemäßen Verfahren dadurch vermieden, daß die Klebestellen (1, 2, 3; 4, 5, 6; 4') mittels elektrostatischer Ladungsbilder erzeugt werden und daß das Klebemittel eine beim elektrostatischen Kopieren, Laserdrucken oder dgl. verwendete pulverförmige Tonermasse ist.

Patentanwalt
Dipl.-Ing. **W. Jackisch**
Menzelstr. 40, 7000 Stuttgart 1

0193726

O. T. Drescher GmbH
Drescherstraße

7255 Rutesheim

A 1-86 898/sooa
23.01.1986

1

**Verfahren zum Verkleben von Erzeugnissen aus Papier, Folien usw., insbesondere von Beschriftungsblättern.**

Die Erfindung betrifft ein Verfahren zum Verkleben von Erzeugnissen aus Papier, Folien usw., insbesondere von Beschriftungsblättern, wie beispielsweise Einblattbriefen, bei dem ein Klebemittel auf vorbestimmte Klebestellen des zum Kopieren, Bedrucken usw. vorgesehenen Erzeugnisses aufgetragen, danach fixiert und wieder aktiviert und damit in einen klebefähigen Zustand überführt wird und anschließend die zu verklebenden Stellen des Erzeugnisses zusammengeklebt werden.

Bei einem bekannten Verfahren werden zum Verkleben von Papier, beispielsweise Tüten, Briefumschlägen, insbesondere aber von Einblattbriefen, sogenannte Mailer, handelsübliche Klebstoffe verwendet. Hierbei wird der Klebstoff an den zu klebenden Stellen punkt-, linien- oder flächenförmig in dünner Schicht aufgetragen und steht an dem zu klebenden Erzeugnis, wie einem Einblattbrief, als trocken aufgetragene Klebemasse für das Schließen des Briefes zur Verfügung. Hierfür werden an sich bekannte Kaltklebstoffe, aber auch Heißkleber, Heißsiegelleime oder andere bekannte Kleber verwendet. Um den beispielsweise auf bestimmte klebende Abschnitte eines Papieres, einer Tüte oder eines Briefumschlages bzw. eines Einblattbriefes aufgetragenen
und trockenen Leim für den eigentlichen Verklebungsvorgang
beim Schließen zu aktivieren, müssen, wenn der Kleber ein
Kaltklebstoff ist, die betreffenden Ränder des zu verschließenden Gegenstandes, wie eines Einblattbriefes,
befeuchtet werden, so daß nach Erweichen des Klebers durch
Aufeinanderlage der zu verklebenden Teile, beispielsweise
der Ränder eines Mailers, dieser verschlossen werden kann.

Bei Verwendung von Heißklebern oder dgl. erfolgt die Verklebung durch Wärmeeinwirkung, durch welche der fein aufgetragene und trockene Heißklebstoff für den Zusammenklebvorgang aktiviert, d.h. in einen plastischen Klebezustand überführt wird. Im allgemeinen bestehen solche Heißkleber aus
thermoplastischen Massen, die unter Einwirkung von Hitze
plastifiziert werden, wodurch ihre Klebwirkung wieder
aktiviert wird.

In der modernen Bürotechnik sind für solche Verklebevorgänge
für Papiere, insbesondere Briefe, Kuvertiermaschinen üblich.

In jedem Falle dieser bekannten Verleimungsart wird der
Leim, also Heiß- oder Kaltleim oder dgl., in einem gesonderten Arbeitsvorgang auf die zu verklebenden Stellen
aufgebracht. Dieser Arbeitsvorgang ist an sich aufwendig
und erfordert gesonderte maschinelle Einrichtungen, und zwar
insbesondere auch deshalb, weil der Leim in der Regel auf
einzelne, örtlich genau begrenzte Stellen des zu verklebenden Erzeugnisses aufgetragen und anschließend getrocknet werden muß. Diese Arbeitsgänge müssen schnell und
rationell erfolgen; im allgemeinen wird das einwandfreie
Auftragen des Leimes sowie das anschließende Trocknen seit
langem auf besonderen maschinellen Einrichtungen, z.B.
auf Klebestationen vorgenommen. Dort wird der anfangs
flüssige bzw. in plastischem Zustand aufgetragene Leim
unmittelbar nach seinem Auftrag getrocknet. Bei Heißleimen, die aus einer plastischen Masse bestehen, muß zudem die
plastische Leimmasse zunächst durch Vorerhitzen in einen
für den Auftrag geeigneten plastischen Zustand überführt
werden, ehe der dann plastisch gewordene Leim punkt-, linien-
oder flächenförmig auf bestimmte Stellen des meist in
elektronischen Beschriftungs- oder Druckmaschinen weiter
zu verarbeitenden Materials aufgebracht werden kann. In
allen Fällen ist das Ergebnis dieser vorbereitenden Arbeitsvorgänge ein Brief, Vordruck oder sonstiges Erzeugnis, das
anschließend auf modernen elektronischen Beschriftungs-
oder Kopiermaschinen, beispielsweise Laserdruckern, im Wege
der Elektrofotografie ausgedruckt wird.

Dieses Ausdrucken oder Kopieren geschieht auf elektrostatischem Wege, wobei auf das auszudruckende und anschließend zu einem geschlossenen Umschlag, beispielsweise
Mailer, zu verklebende Papier pulverförmiges Tonermaterial
aufgebracht wird, das während und nach dem Aufbringen einer
Hitzeeinwirkung bis zu 200° und höher unterliegen kann und damit
auf dem Kopier- oder Druckblatt fest gebunden wird.

Dieser beim Kopier- bzw. Druckvorgang, insbesondere mittels
Laserdruckern, notwendige Erhitzungsvorgang hat jedoch den
Nachteil, daß die zuvor auf das zu kopierende oder zu
beschriftende Blatt an genau definierten Klebestellen
linien-, punkt- oder streifenförmig aufgebrachte thermoplastische Leimmaterial erweicht bzw. plastifiziert,
also klebrig gemacht wird. Dies hat den Nachteil, daß
die Leimschicht bereits während des Druck- bzw. Kopier-
Durchganges, z. B. auf der Tonerwalze der Kopiermaschine
oder des Laserdruckers, Klebewirkung entfaltet.
Hierdurch kommt es zu sehr unerwünschten Klebeerscheinungen
im Drucker oder in der Kopiermaschine, z.B. an der Tonerwalze selbst oder einem dieser nachgeordneten
Maschinenteil, wobei

4

die unerwünschte Abgabe von plastifizierter Klebemasse an
die Tonerwalze sogar zu ihrer Zerstörung führen kann. Um
diese Nachteile zu vermeiden, hat man schon versucht,
Leime oder andere Stoffe zu entwickeln, die diese Nachteile
nicht haben bzw. entsprechende maschinelle oder konstruktive Vorkehrungen an den Kopier- und Laserdruckmaschinen
vorzusehen.

Der Erfindung liegt die Aufgabe zugrunde, ein Verfahren
der eingangs erwähnten Art so auszubilden, daß der Kleber in einfacher
Weise, insbesondere zusammen mit einem Kopier- oder
Druckvorgang auf elektrofotografischem Wege auf das
Erzeugnis aufgebracht werden kann und bei dem unerwünschte
Beeinträchtigung des Kopier- oder Druckvorganges durch
vorzeitiges Aktivieren der Klebemasse vermieden sind.

Diese Aufgabe wird bei einem Verfahren der eingangs erwähnten Art dadurch gelöst, daß die Klebestellen mittels
elektrostatischer Ladungsbilder erzeugt werden und daß
Klebemittel eine beim elektrostatischen Kopieren, Laserdrucken oder dgl. verwendete pulverförmige Tonermasse ist.

Vorteilhaft werden die elektrostatisch aufbringbaren Klebestellen des Erzeugnisses elektronisch, beispielsweise
computergesteuert, auf das Erzeugnis aufgebracht. Dies
ermöglicht es, zusammen mit der übrigen, dem Erzeugnis
aufzugebenden Informationen, beispielsweise Beschriftung,
Bilder usw., auch die Klebestellen mit demselben Arbeitsvorgang in datengünstiger Weise einzugeben.

Eine besonders einfache Verfahrensweise ergibt sich, wenn
das Aufbringen der Tonermasse auf die zur Verklebung des
Erzeugnisses vorgesehenen Klebestellen während des Kopier-
bzw. Laserdruckvorganges erfolgt, wobei die an die Klebestellen aufgebrachte Tonermasse zusammen mit der übrigen,
die Information elektrostatisch übertragenden Tonermasse fixiert wird.

Bei dem erfindungsgemäßen Verfahren wird somit in wirtschaftlicher Weise die Klebemasse nicht in einem getrennten Arbeitsvorgang aufgetragen, sondern beispielsweise beim Kopieren oder Elektrofotografieren (Laserdrucken) unmittelbar mit der zu vervielfältigenden Information aufgebracht. Da das Klebemittel vorzugsweise aus derselben Tonermasse besteht, mit der auch der Informationsauftrag beim Kopieren oder Laserdrucken auf das Erzeugnis aufgebracht wird, bedarf es keiner gesonderten Fixierung des Klebemittels mehr, da dieser Fixiervorgang in einem Durchgang und auf demselben Gerät erfolgen kann.

Das erfindungsgemäße Verfahren hat darüber hinaus den Vorteil, daß die Klebestellen nunmehr zusammen mit der sonstigen Information auf elektronischem Wege eingespeichert werden können. Da die Aufbringung auf elektrostatischem Wege durch pulverförmige Tonermasse erfolgt, lassen sich einzelne linien-, punktförmige oder in sonstiger Geometrie ausgebildete Klebestellen an beliebigen Stellen und in beliebiger geometrischer Form an den zu vervielfältigenden Erzeugnissen anbringen.

Schließlich hat das erfindungsgemäße Verfahren den großen Vorteil, daß die eingangs erwähnten Störungen infolge vorzeitiger Aktivierung des Klebemittels entfallen.

Es ist vorteilhaft, das Verfahren so durchzuführen, daß die Aktivierung der Klebestellen, also die zur Klebefähigkeit notwendige Plastifizierung der Tonermasse nach dem eigentlichen Kopier- oder Druckvorgang vorgenommen wird. Die Plastifizierung der Tonermasse kann vorzugsweise durch Wärmestrahlung, insbesondere durch Mikrowellen, erfolgen. Es ist aber auch möglich, die Plastifizierung der zur Verklebung vorgesehenen Tonermasse durch Einwirkung von

6

Lösungsmitteln, wie Wasser, Weichmacher, Gase, Dämpfe usw.,
vorzunehmen. Je nach Beschaffenheit des Erzeugnisses,
der Papierstärke, dessen Zusammensetzung usw., kann es
zweckmäßig sein, dem Toner zur Erzielung einer verstärkten
Klebewirkung zusätzlich klebeverstärkende Substanzen,
wie beispielsweise thermoplastisches Kunststoffpulver,
z. B. Polyvinylacetat, zuzusetzen.

Das erfindungsgemäße Verfahren kann auch zum Verkleben von
Einzelblättern, wie sie bei Einzel- oder Endlossätzen
üblich sind, eingesetzt werden. Weiter kann das erfindungsgemäße Verfahren zum Verkleben von Einzelblättern zu
Heften, Blöcken usw. angewandt werden. Hierbei ist es lediglich erforderlich, auf die einzelnen Blätter die zum Verkleben dieser Blätter notwendigen Klebestellen in den
Rand- oder Kantenbereichen der Blätter mit Toner zu belegen.

Die Erfindung wird nachstehend an zwei Ausführungsbeispielen
näher erläutert.

Fig. 1 zeigt in schematischer Darstellung einen in der erfindungsgemäßen Weise mit Klebemasse belegten Einzelblattbrief;

Fig. 2 zeigt schematisch Einzelblätter, die in ihren Randbereichen in erfindungsgemäßer Weise mit Klebemittel versehen
sind und zu einem Heft zusammengefügt werden.

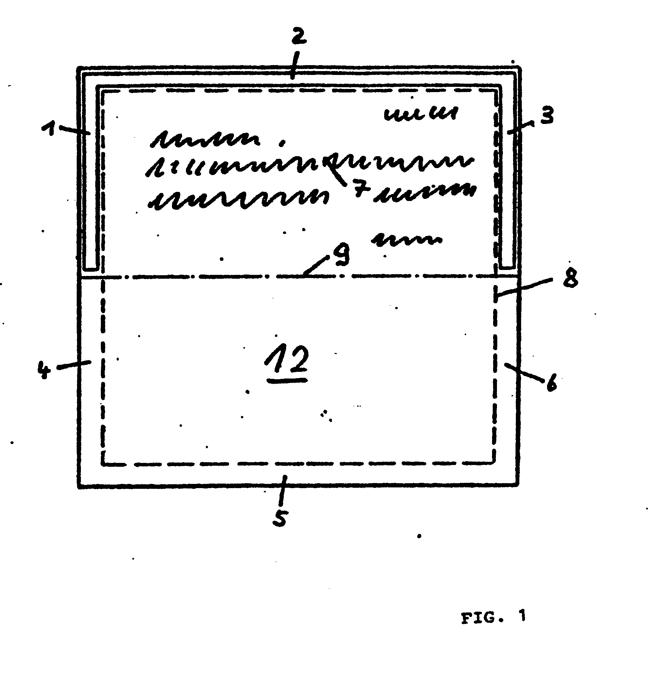

Der in Fig. 1 schematisch dargestellte Einzelbrief 12, sogenannter Mailer, besteht aus einem einzelnen Blatt Papier 12,
dessen Ränder durch eine Perforation 8 gegenüber dem
eigentlichen Briefblatt getrennt sind. Die Beschriftung
und/oder sonstige, beispielsweise bildliche, Informationen
werden auf das eigentliche Briefblatt, beispielsweise auf
elektrofotografischem Wege mittels Laserdruckers, von einer
Vordruckstation (Formularvordruck) bzw. einem Laserstrahl

7

(Daten) elektrostatisch übertragen. Das zu bedruckende
Papier wird an eine Trommel herangeführt, um das sich aus
einzelnen Tonerpartikeln entsprechend des Ladungsbildes
ergebenden Tonerbildes zu übernehmen. In einer nachgeschalteten Station wird das so übertragene Tonerbild durch
Einbrennen fixiert. Diese Technik ist an sich bekannt und
kann beispielsweise aus der Kombination von Lasertechnik
und Elektrofotografie bestehen. In der Zeichnung ist die
auf diese Weise auf den Mailer/12 aufgebrachte Information
in Form einer Beschriftung mit 7 bezeichnet.

Bei den bekannten Verfahren mußten die mit 1, 2, 3 bzw. 4,
5, 6 bezeichneten Randbereiche des Mailers/12 außerhalb der
Umfangsperforation 8 in einem besonderen Verfahrensschritt
vor dem Bedrucken mit flüssigem oder thermoplastischem
Klebstoff versehen werden. Dies geschah in der Regel in einer
dem eigentlichen Drucker vorgeschalteten Papierklebeeinrichtung oder -station. In dieser Station wurde auch der
Klebstoff getrocknet, um zu verhindern, daß beim Kopier-
bzw. Laserdruckvorgang etwa noch weiches Klebematerial
zu Störungen führt.

Um nun zu verhindern, daß während des elektrostatischen Auftragens des Toners und seiner Fixierung infolge der dabei
entstehenden Hitze ein unerwünschtes und zu Störungen
führendes Plastifizieren (Aktivieren) des Klebstoffes auftritt, wird erfindungsgemäß vorzugsweise beim Durchlauf des
Mailers durch den Kopierer bzw. Laserdrucker, also zusammen
mit der Information 7, der Klebstoff in die vorgesehenen
Randbereiche 1, 2, 3 bzw. 4, 5, 6 als derselbe Toner aufgebracht, der auch zur Übertragung der Information 7 verwendet wird. Hierzu braucht lediglich der als Vorlage
dienende Vordruck für den Kopier- bzw. Laserdruckvorgang in
den genannten Randbereichen 1 bis 6 entsprechend gekennzeichnet zu werden. Die Kennzeichnungsstellen 1, 2, 3
bzw. 4, 5, 6, die Klebestellen durch Aufbringen des Toners bilden, können dabei auf elektronischem Wege zusammen mit
der Information 7 in einfacher Weise eingegeben werden.

Wie erwähnt, kann das erfindungsgemäß vorgesehene Klebematerial in Form des für die Belichtung beim Kopieren bzw.
Laserdrucken verwendeten Farbpulvers (Toner) zusammen mit
der eigentlichen Beschriftung 7 auf den Mailer /aufgebracht
werden. Anstelle der im Randbereich vorgesehenen Klebestellen 1, 2, 3 bzw. 4, 5, 6 können demgemäß zusammen mit
der Information 7 an beliebigen anderen Stellen Tonermassen
auf den Mailer oder ein anderes, für den Druck bestimmtes
Erzeugnis aufgebracht werden, ohne daß es hierzu komplizierter und teurer Einstelleinrichtungen in der üblichen
Papierklebeeinrichtung bedarf. Das in der beschriebenen
Weise aufgebrachte Tonermaterial als Klebemittel wird beim
weiteren Kopier- bzw. Laserdruckvorgang ebenso wie der
Toner für die Information 7 unter Anwendung von Hitze fixiert.
Das so fertiggestellte Vervielfältigungs- oder Druckerzeugnis,
das beispielsweise im Endlosverfahren hergestellt werden
kann, kann dann in an sich bekannter Weise in einer Kuvertierstation auf genaues Format nachbearbeitet werden. Hierzu
werden die EDV-beschrifteten Endlosbahnen einem Nachbearbeitegerät zugeführt, das die Trennung in Einzel-Mailer
vornimmt, indem die längs der Papierbahn vorhandenen Führungslochränder entfernt werden und der Mailer selbst längs
der Falzlinie 9 zusammengelegt wird. Anschließend werden
die mit dem Tonermaterial als Klebematerial versehenen Klebezonen 1, 2, 3 bzw. 4, 5, 6 unter leichtem Druck und unter
Anwendung von Hitze versiegelt. Hierbei werden die mit dem
Tonerklebematerial versehenen Stellen des Mailers /gezielt
einer zur Versiegelung ausreichenden Wärmeeinwirkung ausgesetzt. Die Erwärmung bzw. Erhitzung dient zum Plastifizieren,
also zum Erweichen des vorfixierten Tonermaterials im
Bereich der vorgesehenen genau begrenzten Leimzonen. Durch
die Erhitzung wird das fixierte Tonermaterial weich und klebrig,

9

derart, daß durch leichtes Aufeinanderdrücken der beiden
Teile des Mailers eine feste und sichere Klebeverbindung
im Randbereich 1 bis 3 und 4 bis 6 des Mailers entsteht.
In einer anschließenden Kühlstrecke kann eine etwa noch
weiche Klebung dieses Randbereiches ausgehärtet werden. Das
Ergebnis ist ein allseits fest verschlossener Mailer, der
nur vom Empfänger durch Abtrennen der mit Perforation 8
versehenen und zusammengeklebten Randzonen 1,4; 2,5; 3,6 geöffnet werden kann.

Der in Fig. 1 dargestellte erfindungsgemäß ausgebildete Ein-
blattbrief/12 besteht in bekannter Weise aus einem zusammenlegbaren zum elektrostatischen Bedrucken mit Lasern oder
elektrischen Kopieren geeigneten Papier, Folie oder dgl.;
er ist an den vorbestimmten Stellen derart mit Klebstoff in
Streifen- oder Punktform versehen, daß er mindestens einen
allseits verschließbaren Abschnitt aufweist, wobei vorzugsweise dieser Abschnitt das gesamte durch eine Perforation
8 gegenüber den Randzonen 1 bis 6 abgesetzte Informationsblatt umfaßt. Er ist weiter dadurch gekennzeichnet, daß der
Klebstoff aus einer zum elektrostatischen Kopieren oder
zum Laserdrucken geeigneten Tonermasse besteht.

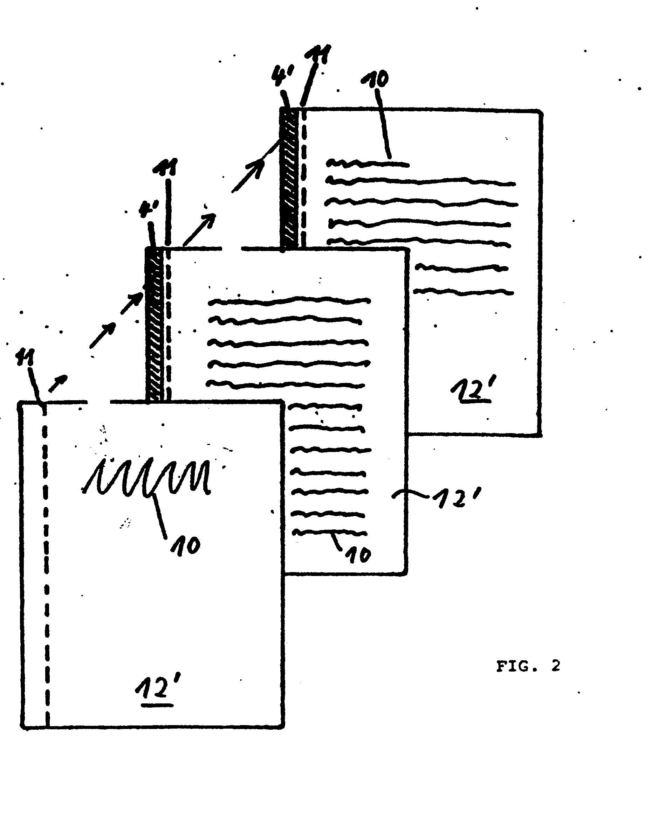

Die Fig. 2 zeigt schematisch Einzelblätter/12' eines Heftes,
wobei die einzelnen Blätter/12' mit Beschriftung 10 versehen
sein können. Die Beschriftung 10 wird elektronisch, beispielsweise mittels Computer gesteuert, aufgebracht. Ebenfalls
mittels Computer auf jedes einzelne Blatt aufgebracht
können die Klebestellen 4' werden, die längs eines Randbereiches angeordnet sind. Nach dem Beschriften und Aufbringen
der Klebestellen 4' der einzelnen Blätter/12' auf elektrostatisch arbeitenden Vervielfältigungsmaschinen lassen sich
diese dann in einfacher Weise zu einem Heft zusammenkleben.
Hierzu ist es lediglich notwendig, die aufgebrachte Toner-
Klebemasse 4' insbesondere durch Einwirkung von Wärme zu
aktivieren, also plastisch zu machen, und die einzelnen Blätter/12' unter

geeignetem Druck zu dem Heft zusammenzupressen. Mit 11 ist eine Perforierung bzw. Nutung bezeichnet.

Auf dieselbe Weise lassen sich Einzel- oder Endlossätze und weitere vielseitige Zusammenklebungen von Papier- oder Folienerzeugnissen erreichen.

Das erfindungsgemäße Verfahren macht das bisher notwendige gesonderte Aufbringen einer Klebemasse auf das Druckerzeugnis, insbesondere einen Mailer, entbehrlich. Damit entfällt nicht nur dieser bisher erforderliche Arbeitsgang mit den dazugehörigen Vorbereitungsmaßnahmen und derjenigen, die zur Erhärtung des aufgebrachten handelsüblichen Klebstoffes bisher erforderlich waren. Es entfallen auch die bisher notwendigen maschinellen Einrichtungen einer solchen dem eigentlichen Kopiergerät bzw. Drucker vorgeschalteten Klebeeinrichtung oder Klebestation.

Gemäß der Erfindung kann nun in sehr rationeller Weise ohne vorherige Behandlung des Papiers mit Klebemasse vorzugsweise zugleich mit dem Toner, der die Informationen überträgt, auch der die eigentliche Klebemasse bildende Toner in einem einzigen Durchgang aufgebracht werden. Dies ergibt nicht nur eine äußerst rationelle Fertigung; es werden mit diesem Verfahren auch die bisher unvermeidlichen Nachteile vermieden, die infolge der unerwünschten vorzeitigen Aktivierung des aufgebrachten Klebstoffes während des Kopierens oder Laserbedruckens innerhalb der Kopier- oder Druckeinrichtung eintraten. Das Aufbringen des Toners als Klebemasse läßt sich elektronisch vorgeben, so daß der Toner auf genau definierten Stellen eines Mailers oder eines sonstigen Druckerzeugnisses aufgebracht werden kann. Es ist damit sichergestellt, daß beim Kopieren oder Bedrucken diese Klebestellen immer wieder bei jedem einzelnen Kopiervorgang an gleicher Stelle gleich viel Tonerklebmasse erhalten.

11

Nach dem Durchlauf des kopierten oder lasergedruckten Papiererzeugnisses ist es an den vorgegebenen Stellen mit Tonermaterial beschichtet und genau wie die übrige Schrift oder
bildliche Übertragung fixiert und erkaltet. Da die aus
Toner bestehende Klebeschicht äußerst dünn ist, unterscheiden
sich diese Klebezonen nicht von den übrigen Informationen
eines Blattes. Der aufgetragene Toner als Klebemasse ist
ebenso, wie die eigentliche Information, unempfindlich
gegen Feuchtigkeits- oder Wärmeeinfluß, so daß auch noch
nach längerer Lagerungszeit Nachteile für eine spätere Aktivierung des Klebetoners nicht zu befürchten sind. Die
eigentliche Aktivierung des Toners im Bereich der Klebezonen kann also entweder unmittelbar sofort in einem
kontinuierlichen Durchgang durch Erhitzung erfolgen. Es
ist aber auch denkbar, daß das Zusammenkleben des bereits
mit Informationen bedruckten Materials erst später zu einem
beliebigen Zeitpunkt erfolgt.

Ein weiterer Vorteil liegt darin, daß die Erweichung, also
die Aktivierung des Tonerklebstoffes in üblicher Weise und
durch übliche Erhitzungsmittel, insbesondere aber durch
Hochfrequenzerhitzung mittels Mikrowellen geschehen kann.
Hierdurch ist es möglich, genau die begrenzten Klebezonen
auf die gewünschte Erweichungstemperatur zu bringen, die zum
Zusammenkleben erforderlich sind.

Mit dem erfindungsgemäßen Verfahren lassen sich auch einzelne
Blätter - anstatt wie bisher durch mechanische Teile wie
Heftklammern, durchdrückbaren Profilrändern usw. - zusammenheften. Hierzu ist es lediglich notwendig, beispielsweise
in der linken oberen Ecke des zu beschriftenden oder zu bedruckenden Blattes auf elektrostatischem Wege Tonermasse
aufzubringen und diese zu fixieren. Das Zusammenkleben kann
dann nach Beschriften des Blattes in einer einfachen Erhitzungstation erfolgen. Diese Erhitzungsstation kann als ein
kleines handliches Bürogerät ausgebildet sein, beispielsweise indem eine Infrarot-Heizung oder Mikrowellen zur Aktivierung der Klebestellen im Gerät angeordnet sind.

Patentanwalt
**Dipl.-Ing. W. Jackisch**
Menzelstr. 40, 7000 Stuttgart 1

O. T. Drescher GmbH
Drescherstraße

7255 Rutesheim

*1*

A 1-86 898/sooa
23.01.1986

0193726

## Ansprüche

1. Verfahren zum Verkleben von Erzeugnissen aus Papier,
   Folien usw., insbesondere von Beschriftungsblättern (12')
   wie beispielsweise Einblattbriefen (12), bei dem ein Klebemittel auf vorbestimmte Klebestellen (1,2,3;4,5,6;4') des zum Kopieren,
   Bedrucken usw. vorgesehenen Erzeugnisses aufgetragen,
   danach fixiert und wieder aktiviert und damit in
   einen klebefähigen Zustand überführt wird und anschließend die zu verklebenden Stellen (1,2,3;4,5,6;4')des
   des Erzeugnisses zusammengeklebt werden.
   dadurch gekennzeichnet, daß die Klebestellen (1,2,3;4,5,6;4') mittels
   elektrostatischer Ladungsbilder erzeugt werden und daß
   das Klebemittel eine beim elektrostatischen Kopieren,
   Laserdrucken oder dgl. verwendete pulverförmige Tonermasse ist.

2. Verfahren nach Anspruch 1,
   dadurch gekennzeichnet, daß die elektrostatisch aufzubringenden Klebestellen (1,2,3;4,5,6;4')elektronisch,beispielsweise
   computergesteuert, aufgebracht werden.

3. Verfahren nach Anspruch 1 oder 2,
   dadurch gekennzeichnet, daß das Aufbringen von Tonermasse auf die zur Verklebung des Erzeugnisses vorgesehenen Stellen (1,2,3;4,5,6;4') während eines Kopier-bzw.Laserdruckvorganges erfolgt und daß die an den Klebestellen(1,2,3;4,5,6;
   4') aufgebrachte Tonermasse zusammen mit der für die zu über-

-2-

tragende Information verwendete Tonermasse fixiert wird.

4. Verfahren nach einem der Ansprüche 1 bis 3, dadurch gekennzeichnet, daß die zur Klebefähigkeit notwendige Plastifizierung der Tonermasse nach dem Kopier- oder Druckvorgang vorgenommen wird.

5. Verfahren nach einem der Ansprüche 1 bis 4, dadurch gekennzeichnet, daß die Plastifizierung der zur Verklebung vorgesehenen Tonermasse durch Wärmestrahlung, beispielsweise durch Mikrowellen, erfolgt.

6. Verfahren nach einem der Ansprüche 1 bis 4, dadurch gekennzeichnet, daß die zur Verklebung vorgesehene Tonermasse durch Einwirkung von Lösungsmitteln, wie Wasser, Weichmacher, Gase, Dämpfe usw., erfolgt.

7. Verfahren nach einem der Ansprüche 1 bis 6, dadurch gekennzeichnet, daß dem Toner zur Erzielung einer verstärkten Klebewirkung zusätzlich klebeverstärkende Substanzen, beispielsweise thermoplastisches Kunststoffpulver, z. B. Polyvinylacetat, zugesetzt werden.

8. Verfahren nach einem der Ansprüche 1 bis 7, dadurch gekennzeichnet, daß zum Verkleben von Einzelblättern (12') die zu verklebenden Rand- bzw. Kantenbereiche (4') der Blätter (12') mit Toner belegt werden.

9. Einblattbrief, bestehend aus einem zusammenlegbaren, zum elektrostatischen Bedrucken mit Laserdrucker oder zum elektrostatischen Kopieren geeigneten Papier-, Folienblatt (12)/oder dgl., das an vorbestimmten Klebe-

(1,2,3;4,5,6;4')

stellen, derart mit Klebestoff in Form von Streifen,
Punkten oder dgl. versehen ist, daß der Einblattbrief
mindestens einen allseits verschließbaren Abschnitt
aufweist,
dadurch gekennzeichnet, daß der Klebestoff aus einer
zum elektrostatischen Kopieren oder zum Laserdrucken
geeigneten Tonermasse besteht.

10. Heft, Block, Mehrblattsatz oder dgl., bestehend aus
    mehreren miteinander durch Klebestellen (4')verbundenen
    Einzelblättern (12'),bei denen die Klebestellen(4') vornehmlich
    in Randbereichen vorgesehen sind,
    dadurch gekennzeichnet, daß der Klebestoff aus einer
    zum elektrostatischen Kopieren oder zum Laserdrucken
    geeignete Tonermasse besteht.

FIG. 1

FIG. 2